# EUROPÄISCHE PATENTSCHRIFT

(11) **EP 2 169 274 B1**
(45) Veröffentlichungstag und Bekanntmachung des Hinweises auf die Patenterteilung: **12.10.2011**
(21) Anmeldenummer: 09168803.6
(22) Anmeldetag: 27.08.2009
(51) Int. Cl.: F16H 61/32

(54) **Schaltkraftunterstützung eines schaltbaren Getriebes**
Shift force assistance of a speed-changing transmission
Assistance de la force de changement de vitesse d'une transmission

(30) Priorität: 24.09.2008 DE 102008042318
(43) Veröffentlichungstag der Anmeldung: 31.03.2010
(73) Patentinhaber: ZF Friedrichshafen AG, 88038 Friedrichshafen (DE)
(72) Erfinder: Keller, Reiner, 78351, Ludwigshafen (DE); Pantke, Michael, 88046, Friedrichshafen (DE); Schuh, Henrik, 88045, Friedrichshafen (DE)

(56) Entgegenhaltungen:
- WO-A-2007/034195
- DE-A1- 4 204 074
- US-B1- 6 792 821

## Beschreibung

Die Erfindung betrifft ein Verfahren zur Steuerung einer Schalteinrichtung eines schaltbaren Getriebes nach dem Oberbegriff des Anspruchs. Ein derartiges Getriebe ist durch einen Fahrer im Sinne eines Bedieners schaltend betätigbar.

Aus der DE 42 04 074 C2 ist eine Schalteinrichtung für ein mehrgängiges Zahnradgetriebe für Kraftfahrzeuge bekannt. Eine Hilfs- oder Gegenkraft, die einer Handschaltkraft überlagert werden kann wird von einem Schaltaktuator in Form eines Elektromotors erzeugt, der mit einer elektronischen Regeleinrichtung verbunden ist: Dabei wird eine von dem Elektromotor erzeugte Kraft in einem Hilfsgetriebe zur Hilfs- oder Gegenkraft übersetzt. Die Regeleinrichtung erhält Eingangssignale von Sensoren und verarbeitet diese nach logischen Regeln zu Ausgangssignalen für die Regelung des Elektromotors. Falls eine vom Fahrer gewählte Gangstufe von einer optimalen Gangstufe abweicht, kann die Hilfskraft in die Gegenkraft umgekehrt werden. Eine Konstruktion der Schalteinrichtung wird nicht vorgeschlagen, somit ist es nicht klar wie die Handschaftkraft mit der Hilf- oder Gegenkraft überlagert wird.

Aus der WO 20071034195 A1 und der US US 6,792,821 B1 sind lineare Schaltaktuatoren für Getriebe, beispielsweise automatisierte Schaltgetriebe oder Automatgetriebe, bekannt, bei welchem eine Schaltkraft durch ein magnetisches Feld erzeugt und berührungslos auf eine Schaltschiene oder Schaltwelle des Getriebes übertragen wird.

Der Erfindung liegt die Aufgabe zugrunde, ein Verfahren zum Betrieb einer einfach darstellbaren und reibungsarmen Schalteinrichtung eines Getriebes vorzuschlagen, wobei vorgesehen sein soll, eine Schaltkraft des Fahrers mit einer zusätzlichen Schaltkraft zu überlagem.

Diese Aufgabe wird durch ein Verfahren gemäß Anspruch 1 gelöst.

Die Erfindung geht von einer bekannten Schaheinrichtung eines schaltbaren Getriebes aus, welches eine mechanische Verbindung zwischen einem von einem Fahrer bedienbaren Handschalthebel und dem Getriebe aufweist, über die eine Schaltkraft des Fahrers zu einer Schaltvorrichtung des Getriebes übertragbar ist. Des Weiteren weist die bekannte Schalteinrichtung einen Sensor auf, der einen Schaltwunsch des Fahrers erkennt, und die Schalteinrichtung weist einen Schaltaktuator auf, der die Schaltkraft des Fahrers mit einer zusätzlichen Schaltkraft überlagern kann, wodurch die an der Schaltvorrichtung anliegende Kraft gegenüber der Schaltkraft des Fahrers um die zusätzliche Schaltkraft verstärkt oder verringert ist. Erfindungsgemäß ist der Schaltaktuator als ein elektromagnetischer Linear-Aktuator ausgeführt, mittels dessen die Schaltkraft des Fahrers mit der zusätzlichen Schaltkraft berührungslos über ein magnetisches Feld überlagerbar ist.

Ein derartiger Linear-Aktuator benötigt kein Hilfsgetriebe und ist einfach aufgebaut, wodurch eine erfindungsgemäße Schalteinrichtung wesentlich einfacher darstellbar ist, als eine Schalteinrichtung, welche eine zusätzliche Schaltkraft mittels eines Elektromotors und eines Hilfsgetriebes erzeugt. Des Weiteren kann ein derartiger Linear-Aktuator die zusätzliche Schaltkraft berührungslos und somit reibungsarm auf die mechanische Verbindung übertragen.

Unter einer Schaltvorrichtung ist hierbei eine beliebige bekannte Vorrichtung zu verstehen, mittels welcher verschiedene Übersetzungen des Getriebes durch Ausnutzung einer Schaltkraft schaltbar sind. Eine derartige Schaltvorrichtung kann beispielsweise aus Schaltwellen, Schaltklauen und Schaltmuffen bestehen, über die in einem Schaltgetriebe eine Änderung der Übersetzung des Getriebes bewirkbar ist.

Der Sensor der erfindungsgemäßen Schalteinrichtung erkennt einen Schaltwunsch des Fahrers bei einem Schaltvorgang und gibt ein Signal zum Schaltaktuator aus. Dieser bewirkt dann, dass bei Bedarf die Schaltkraft des Fahrers mit der zusätzlichen Schaltkraft überlagert wird. Da dies durch den Schaltaktuator mittels eines elektromagnetischen Feldes erfolgt, bewirkt ein Ausfall des erfindungsgemäßen Schaltakutators keine zusätzlichen hemmenden Kräfte bei einem Schaltvorgang.

Der Schaltaktuator weist in einer bevorzugten Weiterbildung der Erfindung zumindest zwei Spulen auf, wobei innerhalb der Spulen zumindest ein magnetisch leitender Kern angeordnet ist, in dem die zusätzliche Schaltkraft hervorrufbar ist. Dieser Kern kann entweder ein Teil der mechanischen Verbindung selbst sein, oder ortsfest mit der mechanischen Verbindung verbunden sein. Bei einer Bestromung der Spulen wird dabei ein elektromagnetisches Feld in und um den Kern erzeugt, welches die zusätzliche Schaltkraft in dem Kern hervorruft. In einer Variante der Erfindung ist der magnetisch leitende Kern permanent magnetisiert, wodurch die durch das elektromagnetische Feld erzeugbare zusätzliche Schaltkraft vergrößert wird. Die permanente Magnetisierung kann dabei den Kern vollständig durchdringen oder nur innerhalb eines Oberflächenbereichs des Kerns eingebracht sein.

Des Weiteren wird vorgeschlagen, dass der Sensor ein kraftproportionaler Wegsensor ist, der einen Schaltwunsch des Fahrers über eine an dem Handschalthebel oder über eine an der mechanischen Verbindung anliegende Schaltkraft des Fahrers erkennt, wodurch ein teurer Kraftsensor eingespart werden kann. Ein derartiger kraftproportionaler Wegsensor wird durch die anliegende Schaltkraft des Fahrers in Abhängigkeit deren Stärke geometrisch verformt, wobei der Sensor den Grad der Verformung bestimmt und daraus die anliegende Schaltkraft ermittelt. Beispielsweise kann der Sensor eine Feder umfassen, die durch die anliegende Schaltkraft kraftproportional zusammengedrückt wird, wobei der Sensor auf Grundlage der Federverkürzung und einer Federkonstante der Feder die anliegende Schaltkraft ermittelt.

Vorteilhaft ist wenn der Sensor in einer direkten Verbindung mit dem Schaltaktuator steht, wodurch die von dem Sensor emittierten Signale direkt und ohne Verzögerung zu dem Schaltaktuator übertragbar sind. Dieser kann somit schnell auf eine erkannte Schaltkraft des Fahrers reagieren und eine entsprechende zusätzliche Schaltkraft der Schaltkraft des Fahrers überlagern. Alternative hierzu ist der Sensor mit einem Steuergerät verbunden, das wiederum mit dem Schaltaktuator verbunden Ist, wodurch das Signal des Sensors zuerst zu dem Steuergerät übertragen wird, welches mittels des Signals die zusätzliche Schaltkraft bestimmt. Das Steuergerät legt dabei die Stärke der zusätzlichen Schaltkraft fest und ob die zusätzliche Schaltkraft der Schaltkraft des Fahrers unterstützend oder entgegengerichtet wirkt. Dabei können beliebige zusätzliche Parameter, wie beispielsweise eine Eingangsdrehzahl des Getriebes, ein Eingangsmoment des Getriebes oder eine Fahrgeschwindigkeit in die Bestimmung der zusätzlichen Schaltkraft miteinbezogen werden. So kann beispielsweise auch ein Fahrwunsch des Fahrers, welcher das Getriebe über lasten könnte, verhindert werden, indem das Steuergerät den Schaltaktuator derart ansteuert, dass der Schaltkraft des Fahrers eine ebenso starke zusätzliche Schaltkraft entgegenrichtet ist. Oder der Fahrer kann durch eine gegen dessen Schaltkraft gerichtete zusätzliche Schaltkraft vor einem gefährlichen oder nicht optimalen Schaltwunsch gewarnt werden.

Um eine Schalteinrichtung der oben genannten Art zu Steuern, wird ein Verfahren vorgeschlagen, bei welchem der Sensor ein Signal an den Schaltaktuator ausgibt, sobald er einen Schaltwunsch des Fahrers erkennt. Das Signal ist dabei von dem Schaltwunsch abhängig. Der Schaltaktuator überlagert daraufhin die Schaltkraft des Fahrers mit der zusätzlichen Schaltkraft, wobei diese von dem Signal des Sensors abhängig ist. Vorzugsweise ist das Signal des Sensors von der Stärke der Schaltkraft des Fahrers abhängig, wodurch der Schaltaktuator entsprechend dieser Stärke betätigt werden kann, um hieran angepasst die Schaltkraft des Fahrers mit der zusätzlichen Schaltkraft zu über lagem. Somit kann beispielsweise eine geringe Schaltkraft des Fahrers durch eine hohe zusätzliche Schaltkraft ergänzt werden.

Erfindungsgemäß ist vorgesehen, dem Fahrer über die zusätzliche Schaltkraft Hinweise zu seinem Schaltwunsch zu übermitteln. Hierzu ist der Sensor mit dem Steuergerät verbunden, welches bestimmt, dass die zusätzliche Schaltkraft pulsierend der Schaltkraft des Fahrers überlagert werden soll, wobei die Art des zu übermittelnden Hinweises über die Länge, Stärke und Frequenz der Pulsation kodiert ist. Der Fahrer wird die Pulsation der zusätzlichen Schaltkraft über den Handschalthebel wahrnehmen, wodurch er von dem Hinweis Kenntnis nehmen kann und gegebenenfalls darauf reagieren kann. Falls der Sensor somit beispielsweise einen Fahrwunsch des Fahrers erkennt, der das Getriebe schädigen würde, kann der Schaltaktuator eine zusätzliche Schaltkraft erzeugen, die stark und schnell pulsierend gegen die Schaltkraft des Fahrers gerichtet ist. Über die Länge, Stärke und Frequenz der Impulse wird der Fahrer somit über die Konsequenzen seines Schaltwunsches in Kenntnis gesetzt und kann diesen gegebenenfalls ändern. Über derartige Hinweise kann dem Fahrer auch vermittelt werden, welche Übersetzungsstufe des Getriebes für die momentane Einsatzsituation des Getriebes am optimalsten ist.

In einer weiteren Weiterbildung des Verfahrens wird zur Überlagerung der Schaltkraft des Fahrers mit der zusätzlichen Schaltkraft zumindest eine der Spulen des Schaltaktuators derart bestromt, dass ein elektromagnetisches Feld entsteht, das die zusätzliche Schaltkraft in dem Kern hervorruft. Dabei überlagert der Kern dann die Schaltkraft des Fahrers mit der zusätzlichen Schaltkraft.

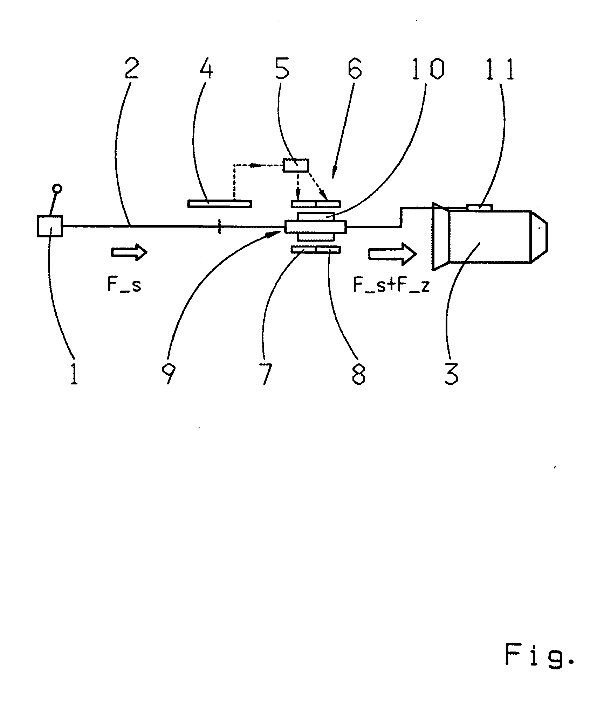

Weitere vorteilhafte Weiterbildungen der Vorteile der Erfindung ergeben sich aus einem unter Bezugnahme auf die Figur prinzipmäßig beschriebenem Ausführungsbeispiel.

In der einzigen Figur ist eine Schalteinrichtung prinzipmäßig dargestellt. Links in der Figur ist der Handschalthebei 1 abgebildet, welcher durch die mechanische Verbindung 2 mit dem Getriebe 3 verbunden ist. Die mechanische Verbindung 2 überträgt eine Schaltkraft F_s des Fahrers vom Handschalthebel 1 zu einer Schaltvorrichtung 11 des Getriebes 3, mittels welcher die Übersetzung des Getriebes 3 änderbar ist. Ein Sensor 4 erkennt den Schaltwunsch des Fahrers indem er die Schaltkraft des Fahrers F_s ermittelt. Bei Erkennung eines Schaltwunsches gibt der Sensor 4 ein Signal zum Steuergerät 5, welches eine entsprechende zusätzliche Schaltkraft F_z bestimmt. Das Steuergerät 5 fordert die zusätzliche Schaltkraft F_z von dem Schaltaktuator 6 an, welcher die zusätzliche Schaltkraft F_z der Schaltkraft F_s des Fahrers überlagert. In diesem Fall wird die zusätzliche Schaltkraft F_z der Schaltkraft des Fahrers hinzugefügt, was durch die Dicke der die Stärken der Schaltkräfte F_s, F_z repräsentierenden Pfeile dargestellt ist. Somit wird das Getriebe 3 mit der Summe der Schaltkräfte F_s + F_z geschaltet.

Der Schaltaktuator 6 umfasst hierbei zwei Spulen 7, 8 und einen magnetisch leitenden Kern 9, der über einen Permanentmagnet 10 verfügt. Bei Bestromung der Spulen 7,8 entsteht ein elektromagnetisches Feld das die zusätzliche Schaltkraft F_z in dem Permanentmagneten 10 und in dem Kern 9 hervorruft. Durch den Permanentmagneten 10 wird dabei die Wirkung des elektromagnetischen Feldes verstärkt und somit die zusätzliche Schaltkraft F_z erhöht.

### Bezugszeichen

- 1: .Handschalthebel
- 2: mechanische Verbindung
- 3: Getriebe
- 4: Sensor
- 5: Steuergerät
- 6: Schaltaktuator
- 7: Spule
- 8: Spule
- 9: Kern
- 10: Permanentmagnet
- 11: Schaltvorrichtung

- F_s: Schaltkraft des Fahrers
- F_z: zusätzliche Schaltkraft

## Patentansprüche

1. Verfahren zur Steuerung einer Schalteinrichtung eines schaltbaren Getriebes (3), welche
- eine mechanische Verbindung (2) zwischen einem von einem Fahrer bedienbaren Handschalthebel (1) und dem Getriebe (3) umfasst, mittels welcher eine Schaltkraft (F_s) des Fahrers zu einer Schaltvorrichtung (11) des Getriebes (3) übertragbar ist, und
- einen Sensor (4) zur Erkennung eines Schaltwunsches des Fahrers umfasst, sowie
- einen Schaltaktuator (6) umfasst, mittels dessen die Schaltkraft (F_s) des Fahrers mit einer zusätzlichen Schaltkraft (F_z) überlagert wird,
wobei wenn der Sensor (4) einen Schaltwunsch des Fahrers erkennt, er ein von dem Schaltwunsch abhängiges Signal zum Schaltaktuator (6) ausgibt, welcher daraufhin die Schaltkraft (F_s) des Fahrers mit der zusätzlichen Schaltkraft (F_z) überlagert, wobei die zusätzliche Schaltkraft (F_z) zumindest von dem Signal des Sensors (4) abhängig ist, **dadurch**
**gekennzeichnet, dass** der Schaltaktuator (6) ein elektromagnetischer Linear-Aktuator ist, mittels dessen die Schaltkraft (F_s) des Fahrers mit der zusätzlichen Schaltkraft (F_z) berührungslos über ein magnetisches Feld überlagert wird, und dass die zusätzliche Schaltkraft (F_z) pulsierend ist, wobei über die Länge, Stärke und Frequenz der Pulsation der zusätzlichen Schaltkraft (F_z) Hinweise an den Fahrer zu dessen Schaltwunsch kodiert sind.

2. Verfahren nach Anspruch 1, **dadurch gekennzeich**n e t, dass der elektromagnetische Schaltaktuator (6) zumindest zwei Spulen (7, 8) und einen innerhalb der Spulen (7, 8) angeordneten magnetisch leitenden Kern (9) aufweist, in dem die zusätzliche Schaltkraft (F_z) hervorrufbar ist.

3. Verfahren nach Anspruch 2, **dadurch gekennzeichnet, dass** der magnetisch leitende Kern (9) Teil der mechanischen Verbindung (2) ist oder mit der mechanischen Verbindung (2) ortsfest verbunden ist.

4. Verfahren nach Anspruch 2 oder 3, **dadurch gekennzeichnet, dass** der magnetisch leitende Kern (9) permanent magnetisiert ist.

5. Verfahren nach Anspruch 1, **dadurch gekennzeichnet, dass** der Sensor (4) ein kraftproportionaler Wegsensor ist.

6. Verfahren nach Anspruch 1, **dadurch gekennzeichnet, dass** der Sensor (4) und der Schaltaktuator (6) derart miteinander verbunden sind, dass Signale des Sensors (4) direkt zum Schaltaktuator (6) übertragbar sind.

7. Verfahren nach Anspruch 1, **dadurch gekennzeichnet, dass** der Sensor (4) und der Schaltaktuator (6) mit einem Steuergerät (5) verbunden sind, mittels dessen die zusätzliche Schaltkraft (F_z) bestimmbar ist.

8. Verfahren nach Anspruch 1, **dadurch gekennzeichnet, dass** zur Überlagerung der Schaltkraft (F_s) des Fahrers mit der zusätzlichen Schaltkraft (F_z) zumindest eine der Spulen (7, 8) des Schaltaktuators (6) derart bestromt wird, dass ein magnetisches Feld entsteht, das die zusätzliche Schaltkraft (F_z) in dem Kern (9) hervorruft, wobei der Kern (9) die Schaltkraft (F_s) des Fahrers mit der zusätzlichen Schaltkraft (F_z) überlagert.

## Claims

1. Method for controlling a gear-shifting device of a speed-changing transmission (3), which
comprises
- a mechanical connection (2) between a manually operated gear-shift lever (1) which can be operated by a driver and the transmission (3), by means of which a gear-shifting force (F_s) of the driver can be transmitted to a gear-shifting device (11) of the transmission (3), and
- a sensor (4) for detecting a gear-shifting request by the driver, and
- a gear-shifting actuator (6) by means of which an additional gear-shifting force (F_z) is superimposed on the gear-shifting force (F_s) of the driver,
wherein, when the sensor (4) detects a gear-shifting request by the driver, said sensor (4) outputs a signal, dependent on the gear-shifting request, to the gear-shifting actuator (6) which subsequently superimposes the additional gear-shifting force (F_z) on the gear-shifting force (F_s) of the driver, wherein the additional gear-shifting force (F_z) is dependent at least on the signal of the sensor (4),
**characterized in that** the gear-shifting actuator (6) is an electromagnetic linear actuator by means of which the additional gear-shifting force (F_z) is superimposed in a contactless fashion on the gear-shifting force (F_s) of the driver by means of a magnetic field, and **in that** the additional gear-shifting force (F_z) is a pulsating force, wherein information for the driver regarding his gear-shifting request are encoded by means of the length, strength and frequency of the pulsation of the additional gear-shifting force (F_z).

2. Method according to Claim 1, **characterized in that** the electromagnetic gear-shifting actuator (6) has at least two coils (7, 8) and a magnetically conductive core (9) which is arranged inside the coils (7, 8) and in which the additional gear-shifting force (F_z) can be brought about.

3. Method according to Claim 2, **characterized in that** the magnetically conductive core (9) is part of the mechanical connection (2) or is connected in a positionally fixed fashion to the mechanical connection (2).

4. Method according to Claim 2 or 3, **characterized in that** the magnetically conductive core (9) is permanently magnetized.

5. Method according to Claim 1, **characterized in that** the sensor (4) is a force-proportional displacement sensor.

6. Method according to Claim 1, **characterized in that** the sensor (4) and the gear-shifting actuator (6) are connected to one another in such a way that signals of the sensor (4) can be transmitted directly to the gear-shifting actuator (6).

7. Method according to Claim 1, **characterized in that** the sensor (4) and the gear-shifting actuator (6) are connected to a control device (5) by means of which the additional gear-shifting force (F_z) can be determined.

8. Method according to Claim 1, **characterized in that** in order to superimpose the additional gear-shifting force (F_z) on the gear-shifting force (F_s) of the driver at least one of the coils (7, 8) of the gear-shifting actuator (6) is energized in such a way that a magnetic field is produced which brings about the additional gear-shifting force (F_z) in the core (9), wherein the core (9) superimposes the additional gear-shifting force (F_z) on the gear-shifting force (F_s) of the driver.

## Revendications

1. Procédé pour commander un dispositif de changement de rapport d'une boîte de vitesses (3) commutable, laquelle
- comprend une liaison mécanique (2) entre un levier de changement de rapport manuel (1) pouvant être actionné par un conducteur et la boîte de vitesses (3), au moyen de laquelle une force de changement de rapport (F_s) du conducteur peut être transmise à un dispositif de changement de rapport (11) de la boîte de vitesses (3), et
- comprend un capteur (4) pour détecter un souhait de changement de rapport du conducteur, ainsi
- qu'un actionneur de changement de rapport (6), au moyen duquel une force de changement de rapport (F_z) supplémentaire est superposée à la force de changement de rapport (F_s) du conducteur,
procédé selon lequel, lorsque le capteur (4) détecte un souhait de changement de rapport du conducteur, il délivre un signal dépendant du souhait de changement de rapport à l'actionneur de changement de rapport (6), lequel superpose alors la force de changement de rapport (F_z) supplémentaire à la force de changement de rapport (F_s) du conducteur, la force de changement de rapport (F_z) supplémentaire étant dépendante au moins du signal du capteur (4),
**caractérisé en ce que** l'actionneur de changement de rapport (6) est un actionneur linéaire électromagnétique au moyen duquel la force de changement de rapport (F_z) supplémentaire est superposée à la force de changement de rapport (F_s) du conducteur sans contact par le biais d'un champ magnétique, et **en ce que** la force de changement de rapport (F_z) supplémentaire est pulsée, des consignes au conducteur à propos de son souhait de changement de rapport étant codées par le biais de la durée, de l'intensité et de la fréquence de la pulsation de la force de changement de rapport (F_z) supplémentaire.

2. Procédé selon la revendication 1, **caractérisé en ce que** l'actionneur de changement de rapport (6) électromagnétique présente au moins deux bobines (7, 8) et un noyau magnétiquement conducteur (9) disposé à l'intérieur des bobines (7, 8), dans lequel peut être produite la force de changement de rapport (F_z) supplémentaire.

3. Procédé selon la revendication 2, **caractérisé en ce que** le noyau magnétiquement conducteur (9) fait partie de la liaison mécanique (2) ou est fixé en position fixe à la liaison mécanique (2).

4. Procédé selon la revendication 2 ou 3, **caractérisé en ce que** le noyau magnétiquement conducteur (9) est à aimantation permanente.

5. Procédé selon la revendication 1, **caractérisé en ce que** le capteur (4) est un capteur de course proportionnel à la force.

6. Procédé selon la revendication 1, **caractérisé en ce que** le capteur (4) et l'actionneur de changement de rapport (6) sont reliés entre eux de telle sorte que les signaux du capteur (4) peuvent être transmis directement à l'actionneur de changement de rapport (6).

7. Procédé selon la revendication 1, **caractérisé en ce que** le capteur (4) et l'actionneur de changement de rapport (6) sont reliés avec un contrôleur (5) au moyen duquel peut être déterminée la force de changement de rapport (F_z) supplémentaire.

8. Procédé selon la revendication 1, **caractérisé en ce que** pour superposer la force de changement de rapport (F_z) supplémentaire à la force de changement de rapport (F_s) du conducteur, au moins l'une des bobines (7, 8) de l'actionneur de changement de rapport (6) est alimentée de telle sorte qu'il se produise un champ magnétique qui produit la force de changement de rapport (F_z) supplémentaire dans le noyau (9), le noyau (9) superposant la force de changement de rapport (F_z) supplémentaire à la force de changement de rapport (F_s) du conducteur.
